# EUROPEAN PATENT SPECIFICATION

(11) **EP 4 726 558 B1**
(45) Date of publication and mention of the grant of the patent: **12.08.2026**
(21) Application number: 24205373.4
(22) Date of filing: 08.10.2024
(51) Int. Cl.: G06F 12/0817, G06F 12/0831

(54) **COMPUTER SYSTEM AND METHOD FOR CACHE COHERENCE**
COMPUTERSYSTEM UND VERFAHREN ZUR CACHE-KOHÄRENZ
SYSTEME INFORMATIQUE ET PROCEDE DE COHERENCE DE CACHE

(43) Date of publication of application: 15.04.2026
(73) Proprietor: ExpectedIT GmbH, 73728 Esslingen am Neckar (DE)
(72) Inventor: STEINMACHER-BUROW, Burkhard, 73728 Esslingen am Neckar (DE); INGIMUNDARSON, Árni, 76137 Karlsruhe (DE); BOERSMA, Maarten, 71088 Holzgerlingen (DE); JANGLE, Ninad, 400601 Thane (IN)
(74) Representative: Witte, Weller & Partner Patentanwälte mbB

(56) References cited:
- US-A1- 2007 294 481
- US-A1- 2012 047 333
- US-A1- 2014 095 806
- US-A1- 2024 184 697

## Description

### Background of the invention

The present invention relates to a computer system. Further, the present invention relates to a method, by a non-inclusive sparse directory, for implementing cache coherence across a plurality of nodes.

Computer systems are generally known in the art. A computer system may comprise one or more computing units where each computing unit may comprise one or more processor cores. Computer systems may further comprise one or more caches. A cache is a special storage resource for copies of data. In particular, a cache may be used by one or more processors to reduce the average cost, i.e. time or energy, when repeatedly accessing data from a main memory. A cache may be a smaller, faster memory, located closer to a processor core, which stores copies of the data from frequently used memory locations.

In a shared memory multi-processor system with a separate cache memory for each processor, it is possible to have many copies of shared data, in particular one copy in the main memory and one in the local cache of each processor that requested it. When one of the copies of data is changed, the other copies must reflect that change. Cache coherence is the discipline which ensures that the changes in the values of shared data are propagated throughout the system in a timely fashion. With other words, cache coherence is the effective uniformity of shared resource data that is stored in multiple local caches. The two most common mechanisms of ensuring cache coherency are snooping and directory-based, each having their own benefits and drawbacks.

Snooping-based protocols tend to be faster, if enough bandwidth is available, since a transaction is a request/response seen by all processors. The drawback is that snooping isn't scalable. Every request must be broadcast to all nodes in a system, meaning that as the system gets larger, the size of the bus and the bandwidth it provides must grow either. Therefore, the workload performance of snooping based protocols is relatively low for large systems with many nodes.

There were also attempts to make the snooping-based protocols more applicable for larger systems, for example by using directory assisted snoop broadcast protocols. For instance, document US 2012/047333 A1 shows a method including receiving a read request from a first caching agent, determining whether a directory entry associated with the memory location indicates that the information is not present in a remote caching agent, and if so, transmitting the information from the memory location to the first caching agent before snoop processing with respect to the read request is completed. However, even such directory assisted snoop broadcast protocols have still a relatively low workload performance for larger systems compared with directory-based cache coherence protocols. Document US2014/095806A1 discloses a multicore processing system to maintain a non-inclusive snoop filter directory and to filter snoops on a cache line granularity

Directory-based cache coherence is a type of cache coherence mechanism, where directories are used to manage caches in place of bus snooping. Directories tend to have longer latencies but use much less bandwidth since messages are point-to-point and not broadcast. The general motivation for using directory-based cache coherence is workload performance. Each entry tracks which nodes are caching the data of a particular memory location. So, when a node requests access to a memory location, coherence actions are restricted to the nodes who currently caching a copy of the data of the memory location. Without a directory, the computer system would have to broadcast a request to all nodes to determine which ones, if any, are caching the data of the memory location. This request is called a "snoop".

In general, a directory may be a full directory or a sparse directory. A full directory tracks the caching (or not) of every memory location of a memory. A memory location may be a memory line. This can be wasteful, since the number of memory locations being cached is limited to the total capacity of all caches. A sparse directory has a capacity which only tracks the caching of a subset of all memory locations of the memory. The capacity, i.e. the number of entries, of the sparse directory is typically similar to the total capacity of all caches, which is typically much smaller than the total number of memory locations. In a sparse directory, a valid entry tracks the caching of a memory location. Typically, each entry has a field to identify the entry's contents as valid or invalid. An invalid entry is also called an empty entry or a free entry. Unless otherwise noted, an entry generally refers to a valid entry. When all of the entries are valid, then the sparse directory's capacity limit is reached. Typically, a sparse directory is implemented as a directory cache. In such a typical directory cache, a given memory location may only be stored in a corresponding set of entries, where the set is a subset of the directory's entries. In general, there are two types of sparse directories, i.e. an inclusive sparse directory and a non-inclusive sparse directory.

An inclusive sparse directory, ISD, always has a valid entry for each and every memory location which is remotely cached by one or more nodes. When the ISD capacity limit is reached, i.e. when all of the ISD's entries are valid, then the ISD has to invalidate or delete an entry before it can add a new entry. For this, the ISD has to recall another memory location chosen by the ISD before a new entry can be added. The chosen location may also be called an eviction victim. For recalling a chosen location, the ISD must send a request to each node currently caching the chosen location, to end the node's caching of the data of the chosen location. Only after the recall is completed, the ISD can then delete the entry for the chosen location. Such a recall is a complicated part of the implementation of an ISD. Further, since a recall ends the nodes' cached copy of the data of the memory location, the workload's subsequent performance can be affected. Eventual future use of the data of the memory location by the node requires communication with the ISD and typically with the line's local node or another node to get a copy of the line's data again.

A non-inclusive sparse directory, NISD, has an entry for all or some of the memory locations that are remotely cached by one or more nodes. However, depending on the capacity of the NISD and the remotely cached memory locations, not every remotely cached memory location has a related entry in the NISD. When the NISD capacity limit is reached, the NISD can simply delete one or more entries, without ending the remote caching of the respective memory location(s). Such an entry may only be deleted if it is in a stable cache state and not in a transient cache state. With other words, in contrast to the ISD, the NISD does not have to perform a recall. Avoiding the recall typically improves workload performance, since the node(s) keep their cached copy of the line for eventual future use by the workload software running on the node. In typical operation, the NISD has an entry for all or most of the remotely cached memory locations. For various applications, the NISD may have fewer entries than the ISD and thus the NISD is physically smaller than an ISD, while keeping same or similar application performance. The ISD generally needs more entries than NISD, so that the ISD can sufficiently avoid the eviction of entries, since the eviction in the ISD hurts performance more than in the NISD. However, in contrast to an ISD, a NISD has to perform cache coherence processing for remotely cached memory locations that do not have an entry in the NISD, i.e. for a miss in the NISD. In general, each miss in the NISD requires a broadcast snoop to all nodes. This generally reduces the workload performance a lot. For that reason, sparse directories are typically ISDs, not NISDs. In particular, the vast majority of computer systems in the prior art that operate with a sparse directory, are an ISD.

For instance, computer systems that use a NISD for implementing directory-based cache coherence are disclosed by Demetriade, Socrates et al.: "Stash directory: A scalable directory for many-core coherence", URL: "https://ieeexplore.ieee.org/document/6835928", further denoted as Stash directory paper, and Menezo, Lucia G. et al.: "The case for a scalable coherence protocol for complex on-chip cache hierarchies in many-core systems", URL: "https://ieeexplore.ieee.org/document/6618824", further denoted as Mosaic paper.

The Stash directory paper and the Mosaic paper each describe a processor or CPU with a non-inclusive directory paired with an inclusive last level cache, LLC. According to the Stash directory paper and the Mosaic paper, the LLC is used to recover the missing entry upon a directory miss in the NISD. The Mosaic paper further discloses to use token-based coherence in this respect.

The known techniques for directory-based cache coherence, still leave room for improvements, in particular with respect to workload performance and efficiency.

### Summary of the invention

Against this background, it is an object of the present invention to provide an improved computer system and an improved method for implementing cache coherence across a plurality of nodes. In particular, it is an object of the present invention to improve a computer system and method for implementing cache coherence with respect to workload performance and efficiency.

According to a first aspect of the invention, there is provided a computer system comprising a plurality of nodes and a non-inclusive sparse directory, NISD, wherein each node comprises a computing unit and a local memory comprising a plurality of memory locations, wherein each computing unit comprises one or more cores and a cache system, wherein each node further comprises a remote-use directory, RUD, wherein the RUD comprises RUD entries, wherein each RUD entry stores remote-use information, RUI, indicating whether or not data of a respective memory location of the local memory of the node is cached by one or more other nodes, wherein the NISD is configured to implement cache coherence across the nodes using the RUI of the RUD of each node.

According to a second aspect of the invention, there is provided a method by a non-inclusive sparse directory, NISD, for implementing cache coherence across a plurality of nodes, wherein each node comprises a computing unit and a local memory comprising a plurality of memory locations, wherein each computing unit comprises one or more cores and a cache system, wherein each node further comprises a remote-use directory, RUD, wherein the RUD comprises RUD entries, wherein each RUD entry stores remote-use information, RUI, indicating whether or not data of a respective memory location of the local memory of the node is cached by one or more other nodes, wherein the method comprises the following step:
- performing cache coherence processing to implement cache coherence across the nodes using the RUI of the RUD of each node.

The method according to the second aspect may be performed by the NISD of the computer system of the first aspect. In particular, the method according to the second aspect may be performed in the computer system according to the first aspect. For instance, the steps of the method according to the second aspect may be performed by a NISD controller of the NISD.

In computer systems, a node is an entity or unit that provides memory and processing resources. Such nodes may also be called computing nodes. In the new computer system and method, each node comprises a computing unit and a local memory. The nodes can communicate with each other. In particular, the nodes may be communicatively connected to each other. The nodes can also communicate with the NISD. In particular, the nodes may be communicatively connected to the NISD.

The computing unit of each node may be processor, preferably a CPU, and the like. The computing unit comprises one or more cores and a cache system. The one or more cores may be on or more processor cores. The cache system may comprise on or more caches for the one or more cores of the node. The cache system may further comprise a cache controller for controlling or managing the one or more caches.

The local memory of each node comprises a plurality of memory locations. The memory locations may be memory lines of the local memory. Each memory location may have a unique address. Each memory location may store data. The data of the memory location can be remotely cached by one or more other nodes. The local memory may be any type of storage medium. Preferably, the local memory may comprise Dynamic Random Access Memory, DRAM. Alternatively, the local memory may also comprise flash memory, a solid-state drive, SSD, or hard disc drive, HDD. For each memory location, the node that comprises the respective memory location in its local memory is also called "home node". The other nodes which can remotely cache the data of the respective memory location of the local memory of the home node are called "remote nodes".

The NISD may comprise a plurality of NISD entries. Each NISD entry relates to a memory location in the local memory of one of the nodes. Each NISD entry includes information on which nodes remotely cache the data of the memory location. With other words, each NIDC entry tracks which nodes are remotely caching the data of a respective memory location. The NISD may be a directory cache. Preferably, the NISD may include a storage unit, in particular including a memory, a table, or the like, in which the NISD entries are stored.

In the NISD, not every remotely cached memory location may have a corresponding NISD entry. In particular, in case that, during operation, the number of remotely cached memory locations exceeds the capacity limit of the NISD, there will exist one or more remotely cached memory locations that do not have a corresponding NISD entry.

The NISD is configured to implement cache coherence across the nodes. Usually, in case a remotely cached memory location does not have a corresponding NISD entry, a coherence action would require a broadcast snoop. The new computer system and method provide means to avoid a broadcast snoop as much as possible. For this purpose, each node further comprises a remote-use directory, RUD, and the NISD uses information of the RUD when performing cache coherence processing.

The RUD comprises RUD entries. Each RUD entry relates to a respective memory location in the local memory of the node. The RUD may be a full directory. In this case, each memory location of the local memory may have a related RUD entry. The RUD may also be an inclusive sparse directory. In this case, each memory location of the local memory that is remotely cached may have a related RUD entry. The RUD entries store remote-use information, RUI. The RUI is information indicating the remote caching of the respective memory location of the local memory of the node by one or more other nodes of the plurality of nodes. For instance, the RUI indicates whether or not data of the respective memory location of the local memory of the node is remotely cached by one or more other nodes. Additionally or alternatively, the nodes may be grouped into a plurality of subsets and the RUI may indicate, for each subset, whether or not the data of the memory location corresponding to the RUI is cached by one or more (other) nodes of the respective subset. The RUD may comprise a RUD controller that is configured to manage or control the RUD entries. Alternatively, the cache controller may be configured manage or control the RUD entries. In particular, the cache controller may be configured to perform the operations of a RUD controller.

The NISD is configured to implement cache coherence across the nodes using the RUI stored in the RUD entries of the RUD of each node. In particular, the NISD may perform cache coherence processing based on the RUI, when necessary. In particular, in case that coherence processing is performed with respect to memory locations which do not have a corresponding NISD entry, the RUI corresponding to the memory location may be used to determine whether or not the memory location is remotely used. With other words, as the NISD entries may be incomplete, the RUI can be used, when the NISD does not include information on a specific remote caching, for example for identifying the need to recreate information on the remote caching in the NISD.

In the new computer system and method, a NISD-based cache coherence technique is provided that can avoid broadcast snoops as much as possible. Thereby, the workload performance and efficiency are improved.

Accordingly, the objective technical problem is fully solved.

In a preferred refinement of any one of the above aspects, the cache system of each node may comprise the RUD of the respective node.

The RUD may be implemented in the cache system. In particular, the RUD may be included in the cache. For instance, the cache may include the RUD entries. In this case, the RUD may be a full directory or an inclusive sparse directory. The cache controller may be configured to manage or control the RUD entries. In particular, the cache controller may be configured to perform the operations of a RUD controller.

In a further refinement of any one of the above aspects or one of its refinements, the local memory of each node may comprise the RUD entries of the respective node

In this case, the RUD is preferably a full directory. The RUD entries may be added to each memory location of the local memory as additional information on the remote caching of the respective memory location. For instance, each RUD entry may have the size of one bit. In this case, "0" may indicate that the respective memory location is not remotely cached, and "1" may indicate that the respective memory location is remotely cached. The RUD controller may be realized in the cache system or the computing unit or could be a separate controller.

In a further refinement of any one of the above aspects or one of its refinements, the NISD may comprise a plurality of NISD entries, wherein each NISD entry relates to a memory location of the local memory of one of the plurality of nodes and includes information indicating which of the one or more nodes remotely cache the data of the respective memory location, wherein the NISD is configured to implement the cache coherence across the nodes using the RUI of the RUD of each node for memory locations that do not have a related NISD entry in the NISD.

By this, the RUI is used for coherence actions relating to remotely cached memory locations that do not have a related NISD entry. Thereby, the workload performance and efficiency are further improved. For instance, the NISD may check whether or not there exists a corresponding NISD entry relating to the specific memory location. When a corresponding NISD entry exists, normal coherence processing is continued, in particular without using the RUI relating to the specific memory location. The existing NISD entry relating to the specific memory location may also be called "hit entry" or "included entry". When no corresponding NISD entry exists, the RUI relating to the specific memory location is used when performing the cache coherence processing.

In a further refinement of any one of the above aspects or one of its refinements, the NISD may comprise a NISD controller that is configured to:
- receive, from a first node of the plurality of nodes, a first request relating to remote caching of a first memory location of the local memory of a second node of the plurality of nodes,
- in case of a NISD miss in which none of the NISD entries relates to remote caching of the first memory location, perform cache coherence processing of the first request using the RUI relating to the first memory location, and
- in case that the NISD entries include a hit entry that relates to remote caching of the first memory location, perform cache coherence processing of the first request without using the RUI relating to the first memory location.

By this, the RUI is used for processing a request relating to a remotely cached memory location that does not have a related NISD entry. Thereby, the workload performance and efficiency are further improved. The NISD controller may be configured to control the operation of the NISD. In particular, the NISD controller may control the cache coherence processing and/or coherence actions.

For cache coherence processing, the NISD controller may receive the first request. The first request relates to remote caching of the first memory location. The first request may be transmitted by the cache controller of the cache system of the first node. The first request may be a start-use request for starting the use of the first memory location or an end-use request for ending the use of the first memory location. A start-use request may be one of a startShared request, a startExclusive request, and an upgrade request. The startShared request is a request for read-only use of the data stored in the respective memory location and thus enables multiple nodes to have a coherent shared use of the data. The startExclusive request is a request for exclusive use of the data stored in the respective memory location and thus enables the requesting node to modify the data in a fashion coherent for the other nodes. The upgrade request is a request for upgrading the use of the data of the respective memory location from a shared use to an exclusive use. An end-use request may be one of a SharedMemCleanEvict request, SharedMemDirtyFlush request, a ExclusiveMemDirtyFlush request and a ExclusiveMemCleanEvict. The SharedMemCleanEvict request is a request sent by a node for ending its shared use of the data stored in the respective memory location, wherein the request does not include a modified copy. The SharedMemDirtyFlush request is a request sent by a node for ending its shared use of the data stored in the respective memory location, wherein the request includes a modified copy of the data that was potentially shared with other nodes, where the modified copy is newer than the stale data value stored in the memory location at the home node. The ExclusiveMemDirtyFlush request is a request sent by a node for ending its exclusive use of the data stored in the respective memory location, wherein the node has modified its copy of the data and the request includes the modified copy. The ExclusiveMemCleanEvict request is a request sent by a node for ending its exclusive use of the data stored in the respective memory location, wherein the node has not modified its copy of the data and the request does not include a modified copy.

After the NISD controller receives the first request, the NISD controller may determine whether or not one of the NISD entries relates to remote caching of the first memory location. In particular, the NISD controller may determine whether (or not) the NISD entries comprise a hit entry that relates to remote caching of the first memory location. The term "NISD miss" describes the case in which the NISD does not have a NISD entry relating to remote caching of the first memory location. With other words, the NISD miss describes the situation in which none of the current NISD entries in the NISD relates to remote caching of the first memory location.

In case that a hit entry exists in the NISD, normal cache coherence processing of the first request is performed without using the RUI relating to the first memory location. With other words, the NISD controller may perform normal coherence actions, for example the same as in an ISD. The normal coherence actions may include updating the respective entry in the NISD and/or sending a reply to the first node. Further, the NISD controller may inform the second node in case the RUI relating to the first memory location is to be changed, for example in case that the first memory location is no longer remotely cached. Further, when the first message is an exclusive or update request, then the NISD may request the end or invalidation of caching by all nodes that remotely cache the data of the first memory location.

In case of a NISD miss, cache coherence processing of the first request is performed using the RUI relating to the first memory location. For instance, the NISD controller may create or recreate a new entry in the NISD relating to the first memory location using the RUI. Upon creation or recreation of the new entry, the NISD controller may also perform the normal coherence actions described above.

In a further refinement of any one of the above aspects or one of its refinements, the NISD controller may be configured to, in case of a NISD miss, obtain the RUI relating to the first memory location, in particular from the second node.

In particular, in case of a NISD miss, the NISD controller can obtain the RUI relating to the first memory location and perform the cache coherence processing of the first request using the obtained RUI relating to the first memory location. For instance, the NISD controller may retrieve the RUI relating to the first memory location from the second node. For this, the NISD controller may send a second request to the second node for requesting the RUI relating to the first memory location. The NISD controller may then receive a response to the second request from the second node including the requested RUI relating to the first memory location. Further, in case that the first node is the second node, the NISD controller may receive the RUI together with the first request from the first node. Further, the NISD controller may be configured to determine or know the RUI in some cases depending on the kind of the first node or the kind of the first request. For example, in case that the first node is the second node, the NISD controller may determine or know that the first memory location is remotely cached by one or more other nodes. Further, in case that the first request is a request for an upgrade or an eviction, the NISD controller may determine or know that the first memory location is remotely cached by one or more other nodes.

In a further refinement of any one of the above aspects or one of its refinements, NISD controller may be configured to:
- in case of a NISD miss, determine based on the RUI relating to the first memory location whether the NISD miss is a true miss in which the data of the first memory location is not remotely cached by one or more other nodes or a false miss in which the data of the first memory location is remotely cached by one or more other nodes,
- in case that the NISD miss is a true miss, create a new initial entry in the NISD for the first memory location and process the first request by using the initial entry, and
- in case that the NISD miss is a false miss, recreate an entry in the NISD for the first memory location and process the first request by using the recreated entry.

In particular, only for recreating a missing entry, a broadcast or multicast snoop is necessary. Thus, snooping is avoided as much as possible. Therefore, the workload performance and efficiency are further improved.

The NISD controller may use the RUI to identify whether the NISD miss is a true miss or a false miss. The term "true miss" describes the case in which the data of the first memory location is not remotely cached by one or more other nodes. With other words, the NISD currently does not miss an entry relating to the first memory location. The term "false miss" describes the case in which the data of the first memory location is remotely cached by one or more other nodes. With other words, the NISD currently misses an entry relating to the first memory location.

When the NISD miss is a true miss, the NISD controller creates a new entry in the NISD for the first memory location. This new entry is also called "created entry" or "initial entry". When the NISD miss is a false miss, the NISD controller recreates an entry, i.e. the missing entry, in the NISD for the first memory location. This new entry is also called "recreated entry" or "reconstructed entry". For recreating the missing entry, a snooping operation may be performed to identify the nodes which remotely cache the first memory location. Before creating or recreating a new entry in the NISD for the first memory location, the NISD controller may delete another, previous NISD entry, in particular in case there is no suitable empty entry found in the NISD. This could be the case when the capacity limit of the NISD is already reached so that a new entry can only be added when another entry is deleted prior to that.

After creating or recreating a new entry for the first memory location, the NISD controller may process the first request by using the created or recreated entry. For instance, the NISD controller may perform normal coherence actions using the created or recreated entry.

In a further refinement of any one of the above aspects or one of its refinements, the NISD may comprise directory slices, wherein each directory slice is configured to manage remote caching of a unique subset of the memory locations of the local memories of the nodes.

In particular, each slice may be like a NISD, with each slice serving a unique subset of the memory locations. By this, the directory slices may operate in parallel. For instance, requests to different subsets may be processed in parallel. Thereby, the performance is further improved.

In a further refinement of any one of the above aspects or one of its refinements, the computer system may comprise a plurality of fabric chips, wherein each fabric chip comprises at least one directory slice of the NISD, in particular wherein the computer system further comprises an interconnect that connects the plurality of nodes and the plurality of fabric chips with each other.

In particular, the directory slices of the NISD may be distributed across two or more fabric chips. Thus, each fabric chip may have multiple NISD slices. By this, the workload performance of the computer system is further improved. Each fabric chip may be connected to each node and vice versa. For this interconnection, the computer system may comprise an interconnect connecting the nodes and fabric chips. Preferably, the fabric chips and the nodes may be connected in a leaf-spine topology. For example, the computer system may comprise horizontal sleds and vertical sleds. Each horizontal sled may comprise one or more of the nodes. Each vertical sled may comprise one or more fabric chips. Each horizontal sled may be connected to each vertical sleds via an orthogonal-direct connection. For instance, such a system having sleds connected via an orthogonal-direct connection is disclosed by EP 4 322 718 A1.

In a further refinement of any one of the above aspects or one of its refinements, the computer system may comprise a plurality of computing chips, wherein each computing chip comprises a computing unit of one of the nodes, in particular wherein each computing chip comprises a plurality of dies, wherein one or more of the dies comprise the computing unit and/or the RUD.

The computing chips may be CPU chips, in particular processor chips. Each computing chip may be a multi-die chip. Thus, the computing chip may comprise a plurality of dies. One or more of the dies of the computing chip may implement be the computing unit. One or more other dies of the computing chip may implement the RUD.

In a further refinement of any one of the above aspects or one of its refinements, the computer system may comprise a multi-die chip, wherein one or more first dies of the multi-die chip comprise the computing units of the nodes, wherein one or more second dies of the multi-die chip comprise the NISD.

By this, a multi-die chip is provided that can operate with high workload performance and high efficiency. The multi-die chip may be a CPU chip. The first dies may also be called "compute dies". Preferably, each first die may comprise a computing unit of one of the nodes. The local memory of each node may be connected to the corresponding first die that comprises the computing unit of the corresponding node. The second dies may also be called "NISD dies". Preferably, each second die may comprise a corresponding NISD slice of the NISD.

In a further refinement of any one of the above aspects or one of its refinements, the NISD comprises a plurality of NISD entries, wherein each NISD entry relates to a memory location of the local memory of one of the plurality of nodes and includes information indicating which of the one or more nodes remotely cache the data of the respective memory location, wherein the step of performing cache coherence processing may comprise:
- receiving, from a first node of the plurality of nodes, a first request relating to remote caching of a first memory location of the local memory of a second node of the plurality of nodes;
- in case of a NISD miss in which none of the NISD entries relates to remote caching of the first memory location, performing cache coherence processing of the first request using the RUI relating to the first memory location; and
- in case that the NISD entries include a hit entry that relates to remote caching of the first memory location, performing cache coherence processing of the first request without using the RUI relating to the first memory location.

As already described above, by this, the RUI is used for processing a request relating to a remotely cached memory location that does not have a related NISD entry. Thereby, the workload performance and efficiency are further improved.

In a further refinement of any one of the above aspects or one of its refinements, the step of performing cache coherence processing of the first request without using the RUI may further comprise:
- processing the first request by using the hit entry.

In particular, the step of processing the first request by using the hit entry may include performing normal coherence actions, as already been above.

In a further refinement of any one of the above aspects or one of its refinements, the step of performing cache coherence processing of the first request using the RUI may further comprise:
- obtaining the RUI relating to the first memory location, in particular from the second node.

As already described above, in case of a NISD miss, the NISD controller can obtains the RUI relating to the first memory location and perform the cache coherence processing of the first request using the obtained RUI relating to the first memory location.

In a further refinement of any one of the above aspects or one of its refinements, the step of performing cache coherence processing of the first request using the RUI may further comprise:
- determining based on the RUI relating to the first memory location whether the NISD miss is a true miss in which the data of the first memory location is not remotely cached by one or more other nodes or a false miss in which the data of the first memory location is remotely cached by one or more other nodes;
- in case that the NISD miss is a true miss, creating a new initial entry in the NISD for the first memory location and processing the first request by using the initial entry; and
- in case that the NISD miss is a false miss, recreating an entry in the NISD for the first memory location and processing the first request by using the recreated entry.

As already described above, only for recreating a missing entry, a broadcast or multicast snoop is necessary. Thus, snooping is avoided as much as possible. Therefore, the workload performance and efficiency are further improved.

In a further refinement of any one of the above aspects or one of its refinements, in case of a false miss, recreating the entry in the NISD may include performing a broadcast snoop communication with all nodes except for the first and second node.

In particular, the NISD may perform the broadcast snoop communication only in case the NISD miss is a false miss. By this, broadcast snoop communication is avoided as much as possible. Thereby, the workload performance of the computer system is further improved. For the broadcast snoop communication, the NISD may send, in particular broadcast, a third request to each node of the plurality of nodes except for the first node and the second node. The third request may be request to each of these nodes for information on remote caching of the first memory location by the respective node. The NISD may then receive a response to the third request from each of these node, wherein the response includes the requested information on the remote caching of the first memory location by the respective node. Based on the broadcast snoop communication, in particular on the basis of the received information on the remote caching of the first memory location from each of these nodes, the NISD may recreate the entry in the NISD.

In a further refinement of any one of the above aspects or one of its refinements, in case of a true miss, the broadcast snoop communication may not be performed.

By this, broadcast snoop communication is avoided as much as possible. Thereby, the workload performance of the computer system is further improved.

In a further refinement of any one of the above aspects or one of its refinements, the nodes may be grouped into a plurality of subsets and the RUI may indicate, for each subset, whether or not the data of the memory location corresponding to the RUI is cached by one or more nodes of the respective subset, wherein, in case of a false miss, recreating the entry in the NISD includes performing multicast snoop communication with the nodes of each subset for which the RUI indicates that one or more nodes of the respective subset remotely cache the data of the first memory location.

In particular, the NISD may perform the multicast snoop communication only in case the NISD miss is a false miss. By this, multicast snoop communication is avoided as much as possible. Further, by using multicast communication instead of broadcast communication, communication is performer with a fewer number of nodes during the snoop communication. Thereby, the workload performance of the computer system m is further improved.

For the multicast snoop communication, the NISD may send, in particular broadcast, a third request to each node of each subset of nodes except for the first node and the second node. The third request may be request to each of these nodes for information on remote caching of the first memory location by the respective node. The NISD may then receive a response to the third request from each of these node, wherein the response includes the requested information on the remote caching of the first memory location by the respective node. Based on the multicast snoop communication, in particular on the basis of the received information on the remote caching of the first memory location from each of these nodes, the NISD may recreate the entry in the NISD.

In a further refinement of any one of the above aspects or one of its refinements, in case of a true miss, the multicast snoop communication may not be performed.

By this, multicast snoop communication is avoided as much as possible. Thereby, the workload performance of the computer system is further improved.

It goes without saying that the features mentioned above and those yet to be explained below cannot only be used in the respective combinations disclosed, but also in different combinations or alone without departing from the scope of the present invention.

### Brief description of the drawings

Further features and advantages will be apparent from the following detailed description. Unless otherwise defined, all technical and scientific terms have the meaning as commonly understood by one of ordinary skill in the art. In the drawings:
- Fig. 1: shows a simplified schematic illustration of a first exemplary embodiment of a computer system;
- Fig. 2: shows a simplified schematic illustration of a second exemplary embodiment of a computer system;
- Fig. 3: shows a simplified schematic illustration of a third exemplary embodiment of a computer system;
- Fig. 4: shows a flow diagram of a first exemplary embodiment of a method for implementing cache coherence across a plurality of nodes;
- Fig. 5: shows a flow diagram of a first example of a process for performing cache coherence processing;
- Fig. 6: shows a flow diagram of an example of a process for performing cache coherence processing of a first request using RUI in case of a NISD miss;
- Fig. 7: shows a flow diagram of an example of a process for performing cache coherence processing of a first request without using RUI in case that the NISD entries include a hit entry;
- Fig. 8: shows a flow diagram of a second example of a process for performing cache coherence processing;
- Fig. 9: shows a flow diagram of an example of a process for cache coherence processing of a start-use request of a home node in case of a NISD miss;
- Fig. 10: shows a flow diagram of an example of a process for cache coherence processing of an end-use request of a home node in case of a NISD miss;
- Fig. 11: shows a flow diagram of an example of a process for cache coherence processing of a start-use request of a remote node in case of a NISD miss;
- Fig. 12: shows a flow diagram of an example of a process for cache coherence processing of an end-use request of a remote node in case of a NISD miss; and
- Fig. 13: shows a flow diagram of an example of a process for starting a new entry in a NISD.

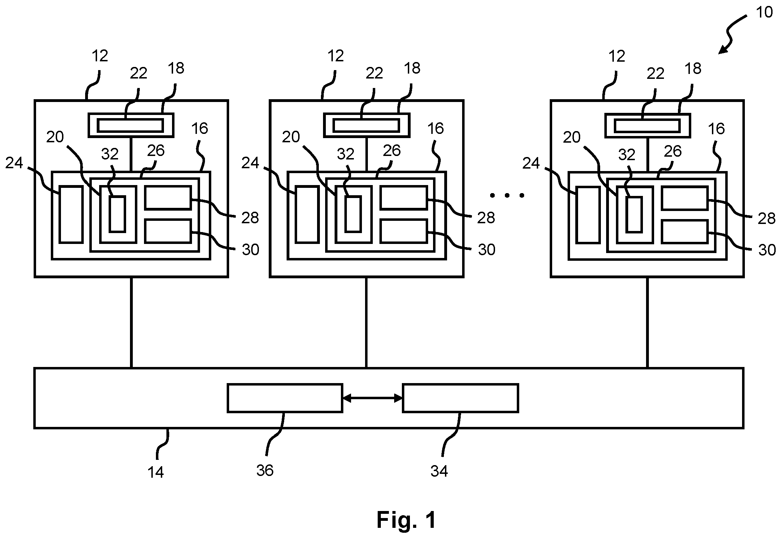

In Fig. 1, a first exemplary embodiment of the new computer system is shown designated by reference number 10 in its entirety.

The computer system 10 comprising a plurality of nodes 12 and a non-inclusive sparse directory, NISD 14. The nodes 12 can communicate with each other. Further, the nodes 12 can also communicate with the NISD 14. In particular, each node 12 may be communicatively connected to the NISD 14.

Each node 12 comprises a computing unit 16, a local memory 18 and a remote-use directory, RUD, 20. The local memory 18 of each node 12 comprises a plurality of memory locations 22. The computing unit 16 of each node 12 comprises one or more cores 24 and a cache system 26. The cache system 26 comprises one or more caches 28 for the one or more cores 24 of the respective node 12. The cache system 26 further comprises a cache controller 30 for controlling or managing the one or more caches 28.

For each memory location 22, the node 12 that comprises the respective memory location 22 in its local memory 18 is also called "home node". The other nodes 12 which can remotely cache the data of the respective memory location 22 of the local memory 18 of the home node 12 are called "remote nodes".

The RUD 20 comprises a plurality of RUD entries 32. Each RUD entry 32 relates to a respective memory location 22 in the local memory 18 of the node 12. Each RUD entry 32 stores remote-use information, RUI. The RUI indicate whether or not the data of the respective memory location 22 of the local memory 18 of the home node 12 is remotely cached by one or more remote nodes 12. Additionally or alternatively, the nodes 12 may be grouped into a plurality of subsets and the RUI may indicate, for each subset, whether or not the data of the respective memory location 22 of the local memory 18 of the home node 12 is remotely cached by one or more remote nodes of the respective subset.

In one example, the cache system 26 of each node 12 may comprise the RUD 20 of the respective node 12. For instance, the cache 28 may include the RUD entries 32. The cache controller 30 may be configured to manage or control the RUD entries 32 included in the cache 28.

In another example, the local memory 18 of each node 12 may comprise the RUD entries 32 the RUD 20 of the respective node 12. The RUD entries 32 may be added to each memory location 22 of the local memory 18 as additional information on the remote caching of the respective memory location 22. For instance, each RUD entry 32 may have the size of one bit. In this case, "0" may indicate that the respective memory location 22 is not remotely cached, and "1" may indicate that the respective memory location 22 is remotely cached. The cache controller 30 may be configured to manage or control the RUD entries 32 included in the local memory 18.

The NISD 14 comprises a plurality of NISD entries 34 and a NISD controller 36. Each NISD entry 34 relates to a respective memory location 22 in the local memory 18 of one of the nodes 12. Each NISD entry 34 includes information on which nodes 12 remotely cache the data of the memory location 22. The NISD 14 is configured to implement cache coherence across the nodes 12 using the RUI of the RUD 20 of each node 12. In particular, the NISD controller 36 may be configured to implement the cache coherence across the nodes 12 using the RUI of the RUD 20 of each node 12 for memory locations 22 that do not have a related NISD entry 34 in the NISD 14. Further, the NISD controller 36 may be configured to implement the cache coherence across the nodes 12 without using the RUI of the RUD 20 of each node 12 for memory locations 22 that have a related NISD entry 34 in the NISD 14.

The NISD controller 36 is configured to receive, from a first node of the plurality of nodes 12, a first request relating to remote caching of a first memory location of the local memory 18 of second node of the plurality of nodes 12. The NISD controller 36 may be configured to determine whether or not one of the NISD entries 34 relates to remote caching of the first memory location.

The NISD controller 36 is configured, in case of a NISD miss in which none of the NISD entries 34 relates to remote caching of the first memory location, to perform cache coherence processing of the first request using the RUI relating to the first memory location. Further, the NISD controller 36 is configured, in case that the NISD entries 34 include a hit entry that relates to remote caching of the first memory location, to perform cache coherence processing of the first request without using the RUI relating to the first memory location.

In case the NISD entries 34 include a hit entry, the NISD controller 36 may operate as follows for performing cache coherence processing of the first request without using the RUI. In particular, the NISD controller 36 may process the first request by using the hit entry.

In case of a NISD miss, the NISD controller 36 may operate as follows for performing cache coherence processing of the first request using the RUI. First, the NISD controller 36 may obtain the RUI relating to the first memory location, in particular from the second node. Further, the NISD controller 36 may determine, based on the RUI relating to the first memory location, whether the NISD miss is a true miss in which the data of the first memory location is not remotely cached by one or more other nodes 12 or a false miss in which the data of the first memory location is remotely cached by one or more other nodes 12. In case that the NISD miss is a true miss, the NISD controller 36 may create a new initial entry in the NISD 14 for the first memory location and process the first request by using the initial entry. In case that the NISD miss is a false miss, the NISD controller 36 may recreate an entry in the NISD 14 for the first memory location and process the first request by using the recreated entry.

In one example, the NISD controller 36 may perform a broadcast snoop communication with all nodes 12 except for the first and second node for recreating the entry in the NISD 14 in the case of a false miss. In another example in which the nodes 12 are grouped into a plurality of subsets and the RUI indicates, for each subset, whether or not the data of the memory location 22 corresponding to the RUI is cached by one or more nodes 12 of the respective subset, the NISD controller 36 may perform, for recreating the entry in the NISD 14 in the case of a false miss, a multicast snoop communication with the nodes 12 of each subset for which the RUI indicates that one or more nodes 12 of the respective subset remotely cache the data of the first memory location.

Further, in case of a true miss, the NISD controller 36 may not perform the broadcast or multicast snoop communication.

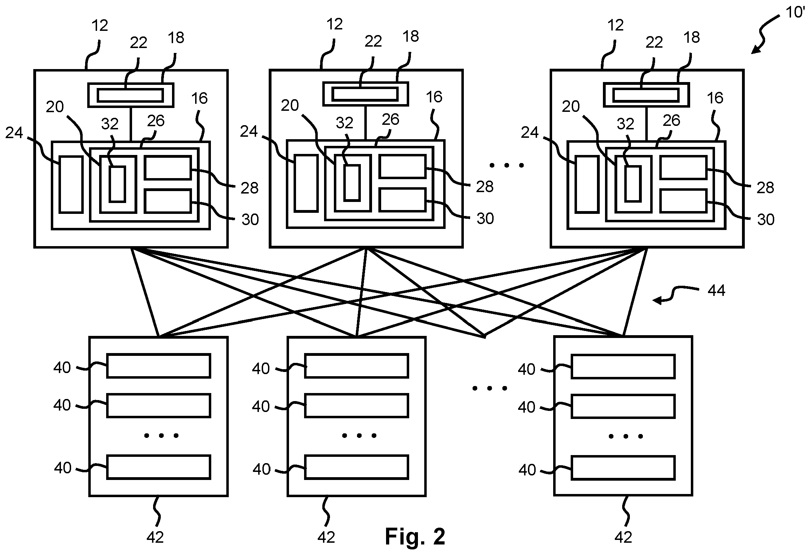

In Fig. 2, a second exemplary embodiment of the new computer system is shown designated by reference number 10' in its entirety. The configuration of the computer system 10' of the second exemplary embodiment is substantially the same as the configuration of the computer system 10 of the first exemplary embodiment. The same elements are designated with the same reference numerals and are not described in more detail.

The NISD 14 comprise directory slices 40. Each directory slice 40 is configured to manage remote caching of a unique subset of memory locations 22 of each local memory 18 of the nodes 12. Further, the computer system 10' comprise a plurality of fabric chips 42. Each fabric chip 42 comprises one or more directory slices 40 of the NISD 14. Each fabric chip 42 be connected to each node 12 and vice versa. The computer system 10' further comprises an interconnect 44. The interconnect 44 connects the plurality of nodes 12 and the plurality of fabric chips 42 with each other. Preferably, the fabric chips 42 and the nodes 12 may be connected in a leaf-spine topology.

The computer system 10' may comprise a plurality of computing chips. Each computing chip may comprise a computing unit 16 of one of the nodes 12. Each computing chip may be a multi-die chip. Each computing chip may comprise a plurality of dies, wherein one or more of the dies comprise the computing unit 16 and/or the RUD 20.

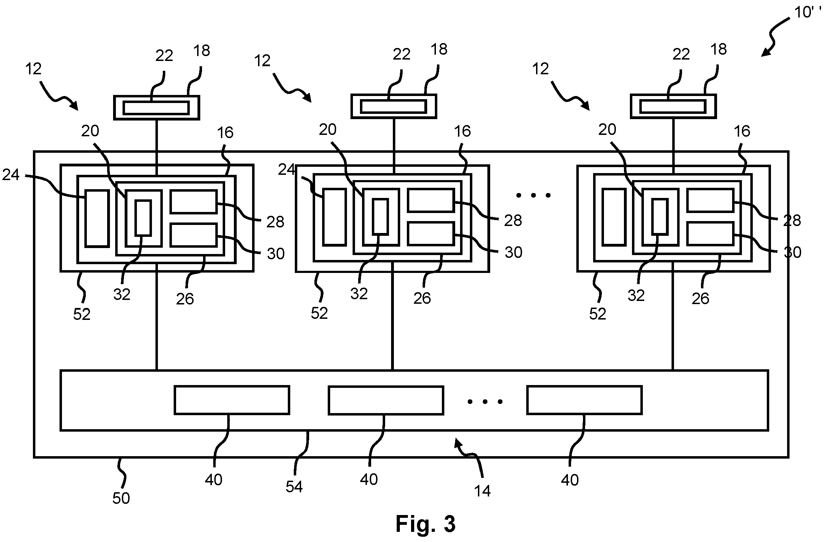

In Fig. 3, a third exemplary embodiment of the new computer system is shown designated by reference number 10" in its entirety. The configuration of the computer system 10" of the third exemplary embodiment is substantially the same as the configuration of the computer system 10 of the first exemplary embodiment and the configuration of the computer system 10' of the second exemplary embodiment. The same elements are designated with the same reference numerals and are not described in more detail.

The computer system 10" comprises a multi-die chip 50. The multi-die chip 50 may be a CPU chip. The multi-die chip 50 comprises one or more first dies 52 and one or more second dies 54. The one or more first dies 52 comprise the computing units 16 of the nodes 12. In particular, each first die 52 comprises a computing unit 16 of one of the nodes 12. The local memory 18 of each node 12 is connected to the corresponding first die 52 that comprises the computing unit 16 of the corresponding node 12. The one or more second dies 54 comprise the NISD 14. In particular, each second die 54 comprises a corresponding NISD slice 40 of the NISD 14.

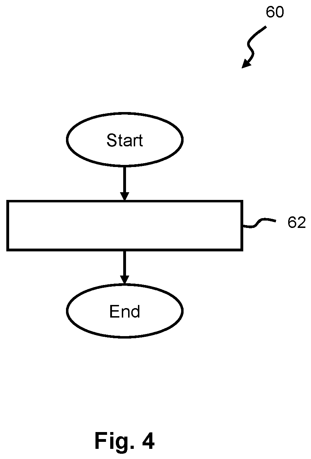

In Fig. 4, a first exemplary embodiment of the new method is shown designated by reference number 60 in its entirety. The method 60 may be performed by the NISD 14 of one of the computer systems 10, 10', 10" of any of the first, second or third exemplary embodiment. In particular, the method 60 may be conducted in the computer system 10 of the first exemplary embodiment or in the computer system 10' of the second exemplary embodiment or in the computer system 10" of the third exemplary embodiment. The method serves for implementing cache coherence across the plurality of nodes 12.

In a step 62 of the method 60, cache coherence processing is performed to implement cache coherence across the nodes 12 using the RUI of the RUD 20 of each node 12. The step 62 may be performed by the NISD controller 36 of the NISD 14. In particular, the NISD 14 may perform the cache coherence processing based on the RUI, when necessary. For instance, the RUI of the RUD of each node 12 may be used for memory locations 22 that do not have a related NISD entry 34 in the NISD 14. However, the RUI of the RUD of each node 12 may not be used for memory locations 22 that have a related NISD entry 34 in the NISD 14.

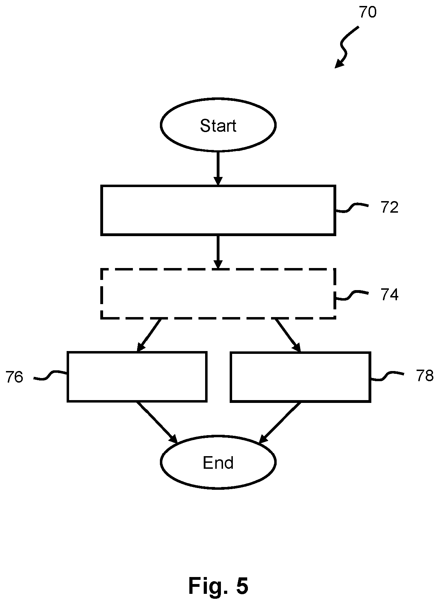

In Fig. 5, a first example of a process 70 for performing cache coherence processing is shown. Preferably, in the step 62 of the method 60, the cache coherence processing may be performed by using the process 70.

In a first step 72 of the process 70, a first request is received from a first node of the plurality of nodes 12. The first request relates to remote caching of a first memory location of the local memory 18 of a second node of the plurality of nodes 12. The step 72 may be performed by the NISD controller 36 of the NISD 14. The first request may be a start-use request (e.g startShared request or startExclusive request or upgrade request) or an end-use request. The first request may be transmitted by the cache controller 30 of the cache system 26 of the first node.

In a further, optional step 74 of the process 70, it is determined whether or not one of the NISD entries 34 relates to remote caching of the first memory location. The step 74 may be performed by the NISD controller 36 of the NISD 14. In particular, the NISD controller 36 may determine whether or not the NISD entries 34 comprise a hit entry that relates to remote caching of the first memory location.

In a further step 76 of the process 70, cache coherence processing of the first request is performed using the RUI relating to the first memory location in case of a NISD miss in which none of the NISD entries 34 relates to remote caching of the first memory location. With other words, step 76 is conducted in case of a NISD miss, i.e. in case that it is determined in in step 74 that none of the NISD entries 34 relates to remote caching of the first memory location. The step 76 may be performed by the NISD controller 36 of the NISD 14.

In a further step 78 of the process 70, cache coherence processing of the first request is performed without using the RUI relating to the first memory location in case the NISD entries 34 include a hit entry that relates to remote caching of the first memory location. With other words, step 76 is conducted case that it is determined in in step 74 that one of the NISD entries 34 relates to remote caching of the first memory location, i.e. in case that a hit entry is found among the NISD entries 34. The step 78 may be performed by the NISD controller 36 of the NISD 14.

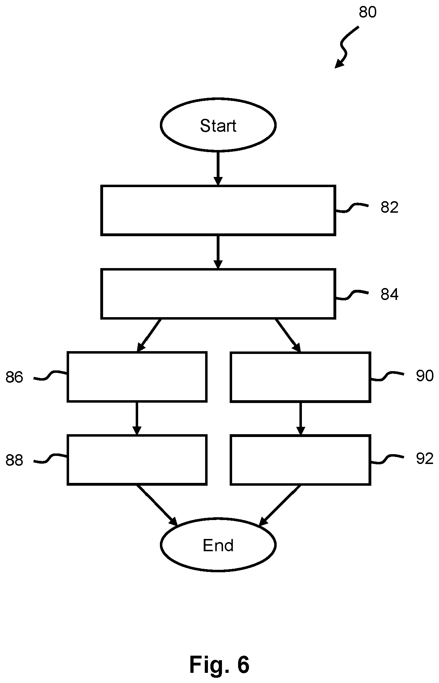

In Fig. 6, an example of a process 80 for performing cache coherence processing of the first request using the RUI relating to the first memory location in case of a NISD miss is shown. Preferably, in the step 76 of the process 70, the cache coherence processing may be performed by using the process 80.

In a first step 82 of the process 80, the RUI relating to the first memory location is obtained, in particular from the second node. The step 82 may be performed by the NISD controller 36 of the NISD 14.

In a further step 84 of the process 80, based on the RUI relating to the first memory location, it is determined whether the NISD miss is a true miss in which the data of the first memory location is not remotely cached by one or more other nodes12 or a false miss in which the data of the first memory location is remotely cached by one or more other nodes 12. The step 84 may be performed by the NISD controller 36 of the NISD 14.

In a further step 86 of the process 80, a new initial entry in the NISD 14 for the first memory location. In a further step 88 of the process 80, the first request is processed by using the initial entry. The steps 86 and 88 are both conducted only in case that the NISD miss is a true miss. The steps 86 and 88 may be performed by the NISD controller 36 of the NISD 14. The step 88 may include performing normal coherence actions based on the first request using the initial (i.e. created) entry.

In a further step 90 of the process 80, an entry in the NISD 14 is recreated for the first memory location. In a further step 92 of the process 80, the first request is processed by using the recreated entry. The steps 90 and 92 are both conducted only in case that the NISD miss is false miss. The steps 90 and 92 may be performed by the NISD controller 36 of the NISD 14. The step 92 may include performing normal coherence actions based on the first request using the recreated (i.e. reconstructed) entry.

For recreating the entry in step 90, a snooping operation may be performed by the NISD controller 36 to identify the nodes 12 which remotely cache the first memory location. The snooping operation may be a broadcast snoop communication with all nodes 12 except for the first and second node. Alternatively, in the case that the nodes 12 are grouped into a plurality of subsets and the RUI indicates, for each subset, whether or not the data of the memory location 22 corresponding to the RUI is cached by one or more nodes 12 of the respective subset, the snooping operation may be a multicast snoop communication with the nodes 12 of each subset for which the RUI indicates that one or more nodes 12 of the respective subset remotely cache the data of the first memory location.

In step 86, i.e. in case of a true miss, the NISD controller 36 does not perform the broadcast or multicast snoop communication.

Before performing the steps 86, 88, 90 and 92, the NISD controller 36 may delete another, previous NISD entry 34, in particular in case there is no suitable empty entry found in the NISD 14.

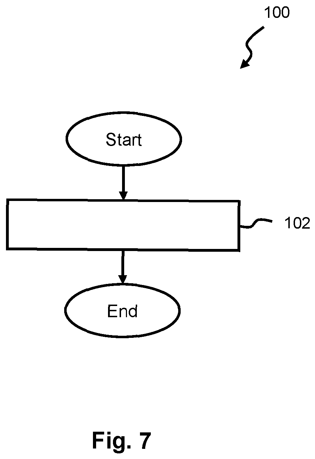

In Fig. 7, an example of a process 100 for performing cache coherence processing of the first request without using the RUI relating to the first memory location in case the NISD entries include a hit entry that relates to remote caching of the first memory location is shown. Preferably, in the step 78 of the process 70, the cache coherence processing may be performed by using the process 100.

In a step 102 of the process 100, the first request is processed by using the hit entry. The step 102 may be performed by the NISD controller 36 of the NISD 14. The step 102 may include performing normal coherence actions based on the first request using the hit entry.

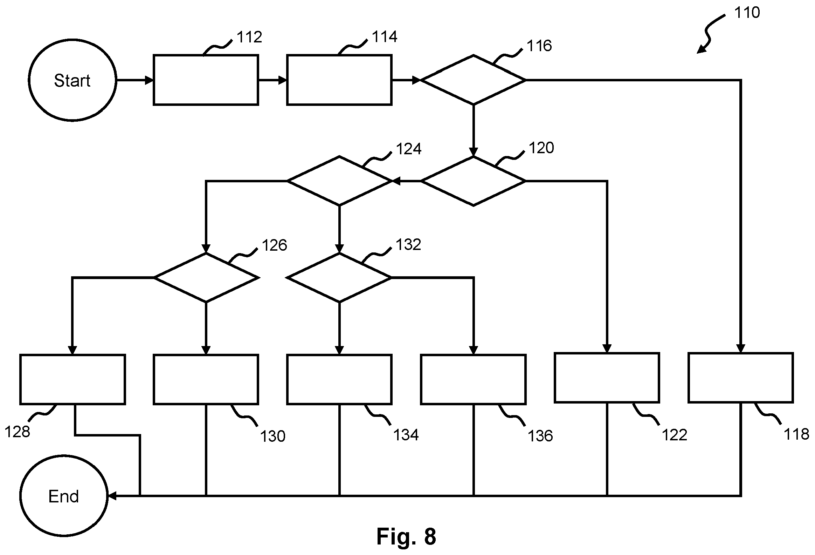

In Fig. 8, a first example of a process 110 for performing cache coherence processing is shown. Preferably, in the step 62 of the method 60, the cache coherence processing may be performed by using the process 110. The process 110 comprises the steps 112, 114, 116, 118, 120, 122, 124, 126, 128, 130, 132, 134 and 136.

The process 110 starts with step 112. In step 112, the NISD controller receives a first message from a first node of the plurality of nodes 12. The first message relates to remote caching of a first memory location of the local memory 18 of a second node of the plurality of nodes 12. The first message may be a response or a request. The first message may be transmitted by the cache controller 30 of the cache system 26 of the first node. The process 110 continues with step 114.

In step 114, the NISD controller 36 searches in the NISD entries 34 for an entry that relates to remote caching of the first memory location. The process 110 continues with step 116.

In step 116, the NISD controller 36 determines whether or not an entry that relates to remote caching of the first memory location is found in the NISD entries 34. In case that an entry that relates to remote caching of the first memory location is found in the NISD entries 34, the found entry is called hit entry and the process 110 continues with step 118. In case that an entry that relates to remote caching of the first memory location is not found in the NISD entries 34, the process 110 continues with step 120.

In step 118, the NISD controller 36 processes the first message by using the hit entry. The step 118 may include performing normal coherence actions based on the first message using the hit entry. The normal coherence actions may include updating the respective entry in the NISD 14 and/or sending a reply to the first node. Further, the NISD controller 36 may inform the second node in case the RUI relating to the first memory location is to be changed, for example in case that the first memory location is no longer remotely cached. Further, when the first message is an exclusive or update request, then the NISD controller 36 may request the end or invalidation of caching by all nodes 12 that remotely cache the data of the first memory location. Thereafter, the process 110 ends.

In step 120, the NISD controller 36 determines whether the first message is a request or a response. In case that the first message is a response, the process 110 continues with step 122. In case that the first message is a request, the first message is called first request and the process 110 continues with step 124. In particular, the first request may be one of a startShared request, a startExclusive request, an upgrade request, a SharedMemCleanEvict request, SharedMemDirtyFlush request, a ExclusiveMemDirtyFlush request and a ExclusiveMemCleanEvict.

In step 122, the NISD controller 36 provides, in particular outputs, a system error. Thereafter, the process 110 ends.

In step 124, the NISD controller 36 determines whether the second node is a home node or a remote node for the first memory location. In case that the second node is the home node for the first memory location, the process 110 continues with step 126. In case that the second node is the remote node for the first memory location, the process 110 continues with step 132.

In step 126, the NISD controller 36 determines whether the first request is a start-use request for starting the use of the first memory location or an end-use request for ending the use of the first memory location. In case that the first request is a start-use request, the process 110 continues with step 128. In case that the first request is an end-use request, the process 110 continues with step 130.

In step 128, the NISD controller 36 performs a first process for cache coherence processing of the first request. Thereafter, the process 110 ends

In step 130, the NISD controller 36 performs a second process for cache coherence processing of the first request. Thereafter, the process 110 ends

In step 132, the NISD controller 36 determines whether the first request is a start-use request for starting the use of the first memory location or an end-use request for ending the use of the first memory location. In case that the first request is a start-use request, the process 110 continues with step 134. In case that the first request is an end-use request, the process 110 continues with step 136.

In step 134, the NISD controller 36 performs a third process for cache coherence processing of the first request. Thereafter, the process 110 ends

In step 136, the NISD controller 36 performs a fourth process for cache coherence processing of the first request. Thereafter, the process 110 ends

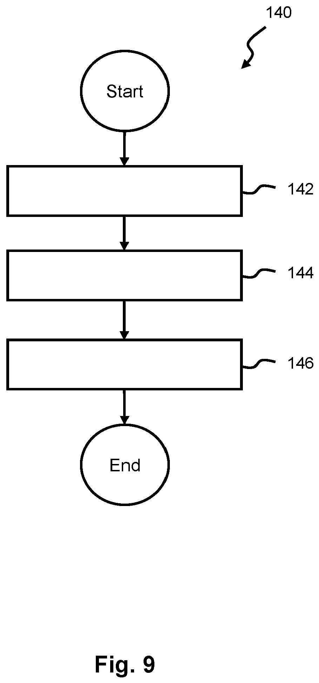

In Fig. 9, an example of a process 140 for cache coherence processing of a start-use request of a home node in case of a NISD miss is shown. Preferably, in the step 128 of the process 110, the first cache coherence processing of the first request may be performed by using the process 140. The process 140 comprises the steps 142, 144 and 146.

The first request sent by the home node must have been caused by the home node's RUI indicating that the data of the first memory location is remotely cached. Thus, when the first request is sent by the home node and a NISD miss occurs, the NISD miss is a false miss. Thus, the NISD controller 36 effectively already knows the RUI information and thus may not issue a request to the home node to obtain the RUI. Alternatively, in case the nodes may be grouped into a plurality of subsets and the RUI may indicate, for each subset, whether or not the data of the memory location corresponding to the RUI is cached by one or more nodes of the respective subset, the NISD controller 36 may obtain the RUI relating to the first memory location from the home node.

The process 140 starts with step 142. In step 142, the NISD controller 36 starts a new entry in the NISD 14, wherein the new entry relates to remote caching of the data stored in the first memory location. The process 140 continues with step 144.

In step 144, the NISD controller 36 reconstructs the new entry. For reconstructing the new entry, a snooping operation is performed by the NISD controller 36 to identify the nodes 12 which remotely cache the first memory location. Based on the information gathered by the snooping operation, the new entry is completed. For instance, the snooping operation may be a broadcast snoop communication with all nodes 12 except for the first and second node. Alternatively, in the case that the nodes 12 are grouped into a plurality of subsets and the RUI indicates, for each subset, whether or not the data of the memory location 22 corresponding to the RUI is cached by one or more nodes 12 of the respective subset, the NISD controller may obtain the RUI relating to the first memory location and the snooping operation may be a multicast snoop communication with the nodes 12 of each subset for which the RUI indicates that one or more nodes 12 of the respective subset remotely cache the data of the first memory location. For obtaining the RUI, the NISD controller 36 may receive the RUI together with the first request from the home node. Alternatively, the NISD controller 36 may retrieve the RUI relating to the first memory location from the home node. The process 140 continues with step 146.

In step 146, the NISD controller 36 processes the first message by using the reconstructed entry. The step 118 may include performing normal coherence actions based on the first message using the reconstructed entry. The normal coherence actions may be the same as described in step 118. Thereafter, the process 140 ends.

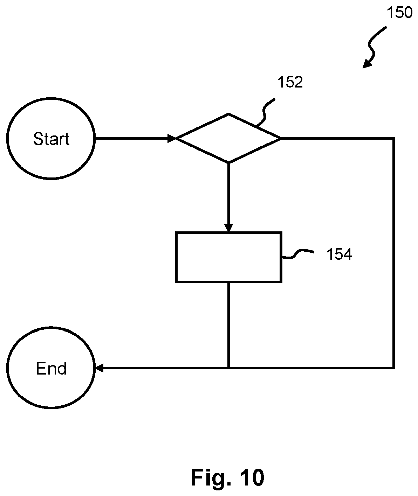

In Fig. 10, an example of a process 150 for cache coherence processing of a end-use request of a home node in case of a NISD miss is shown. Preferably, in the step 130 of the process 110, the second cache coherence processing of the first request may be performed by using the process 150. The process 150 comprises the steps 152 and 154.

In step 152, the NISD controller 36 determines whether or not the first request is a SharedMemCleanEvict request. In case that the first request is not a SharedMemCleanEvict request, the process 150 continues with step 154. In case that the first request is a SharedMemCleanEvict request, the process 150 ends.

In step 154, the NISD controller 36 provides, in particular outputs, a system error. Thereafter, the process 150 ends.

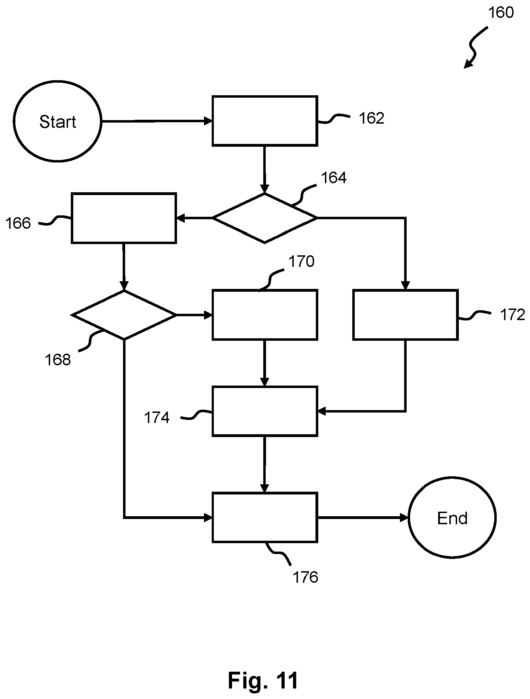

In Fig. 11, an example of a process 160 for cache coherence processing of a start-use request of a remote node in case of a NISD miss is shown. Preferably, in the step 34 of the process 110, the third cache coherence processing of the first request may be performed by using the process 160. The process 160 comprises the steps 162, 164, 166, 168, 170, 172, 174 and 176.

In step 162, the NISD controller 36 starts a new entry in the NISD 14, wherein the new entry relates to remote caching of the data stored in the first memory location. The process 160 continues with step 164.

In step 164, the NISD controller 36 determines whether the first request is an upgrade request. In case that the first request is an upgrade request, the process 160 continues with step 172. In case that the first request is not an upgrade request, the process 160 continues with step 166.

In step 166, the NISD controller 36 obtains the RUI relating to the first memory location. In particular, the NISD controller 36 may retrieve the RUI relating to the first memory location from the home node.

In step 168, the NISD controller 36 determines, based on the obtained RUI relating to the first memory location, whether or not the data of the first memory location is remotely cached by one or more other nodes. In case that the data of the first memory location is remotely cached by one or more other nodes, the process continues with step 170. In case that the data of the first memory location is not remotely cached by one or more other nodes, the process continues with step 176.

In step 170, the NISD controller 36 determines a set of nodes. The set of nodes may include all nodes except for the first node and the second node. Alternatively, in case that the nodes 12 are grouped into a plurality of subsets and the RUI indicates, for each subset, whether or not the data of the memory location 22 corresponding to the RUI is cached by one or more nodes 12 of the respective subset, the NISD controller 36 determines a set of nodes based on the obtained RUI relating to the first memory location. In particular, the NISD controller 36 may exclude nodes of subsets from the set that do not remotely cache the data of the first memory location. The process continues with step 174.

In step 172, the NISD controller 36 identifies a set of nodes that includes all nodes except for the first node. The process continues with step 174.

In step 174, the NISD controller 36 reconstructs the new entry that relates to remote caching of the data stored in the first memory location. For reconstructing the new entry, a snooping operation is performed by the NISD controller 36 to identify the nodes 12 which remotely cache the first memory location. Based on the information gathered by the snooping operation, the new entry is completed. For instance, the snooping operation may be a broadcast or a multicast snoop communication with the determined or identified set of nodes 12.

In step 176, the NISD controller 36 processes the first message by using the new entry, in particular the reconstructed entry when coming from step 174. The step 176 may include performing normal coherence actions based on the first request using the new entry, in particular the reconstructed entry when coming from step 174. The normal coherence actions may be the same as described in step 118. Thereafter, the process 140 ends. Thereafter, the process 160 ends.

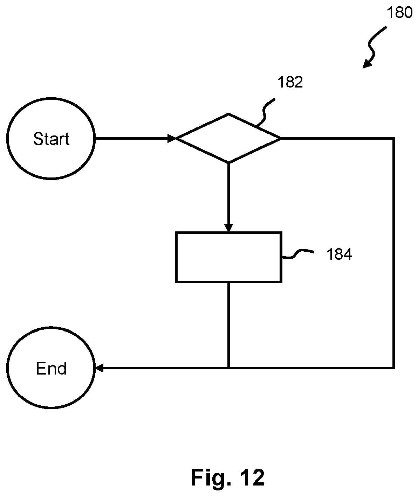

In Fig. 12, an example of a process 180 for cache coherence processing of an end-use request of a remote node in case of a NISD miss is shown. Preferably, in the step 136 of the process 110, the fourth cache coherence processing of the first request may be performed by using the process 180. The process 180 comprises the steps 182 and 184.

In step 182, the NISD controller 36 determines whether the first request is a SharedMemCleanEvict request. In case that the first request is not a SharedMemCleanEvict request, the process 180 continues with step 184. In case that the first request is a SharedMemCleanEvict request, the process 180 ends.

In step 184, the first request or information on the first request is sent to the home node of the first memory location. Thereafter, the process 180 ends.

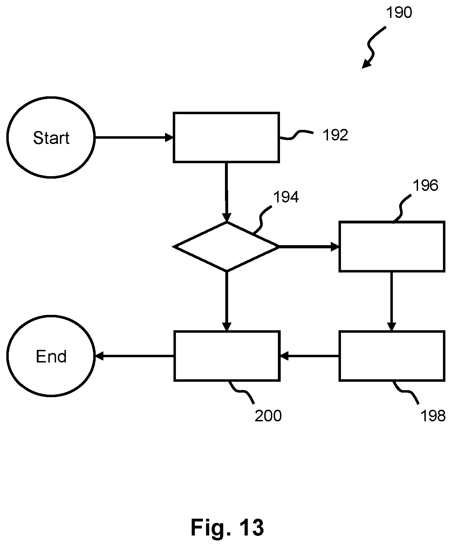

In Fig. 13, an example of a process 190 for starting a new entry in a NISD 14 is shown. Preferably, in the steps 142 and 162 of the processes 140 and 160, the creating of the new entry may be performed by using the process 190. The process 190 comprises the steps 192, 194, 196, 198 and 200.

In step 192, the NISD controller 36 searches for an empty entry in the NISD 14. In particular, the NISD controller 36 may search for an empty entry in the NISD 14 in a set, in particular in a directory slice 40, suitable to store the new entry relating to the first memory location. The process 190 continues with step 194.

In step 194, the NISD controller 36 determines whether or not an empty entry is found in the NISD 14, in particular that is suitable to store an entry relating to the first memory location. In case a suitable empty entry is found, the process 190 continues with step 200. In case no suitable empty entry is found, the process 190 continues with step 196.

In step 196, the NISD controller 36 identifies a stable entry, in particular in a set, in particular in a directory slice 40, suitable to store the new entry relating to the first memory location. A stable entry for a memory location means that the NISD 14 knows of no outstanding messages with respect to the memory location. Otherwise the entry is called a transient entry. The process 190 continues with step 194.

In step 198, the NISD controller 36 deletes or invalidates the content of the identified stable entry to create an empty entry suitable for the first memory location. The process 190 continues with step 200.

In step 200, the NISD controller 36 starts a new entry for the first memory location in the suitable empty entry. Thereafter, the process 190 ends.

## Claims

1. A computer system (10, 10', 10") comprising a plurality of nodes (12) and a non-inclusive sparse directory, NISD (14), wherein each node (12) comprises a computing unit (16) and a local memory (18) comprising a plurality of memory locations (22), wherein each computing unit (16) comprises one or more cores (24) and a cache system (26), **characterized in that** each node (12) further comprises a remote-use directory, RUD (20), wherein the RUD (20) comprises RUD entries (32), wherein each RUD entry (32) stores remote-use information, RUI, indicating whether or not data of a respective memory location (22) of the local memory (18) of the node (12) is cached by one or more other nodes (12), wherein the NISD (14) is configured to implement cache coherence across the nodes (12) using the RUI of the RUD (20) of each node (12).

2. The computer system (10, 10', 10") according to claim 1, wherein the cache system (26) of each node (12) comprises the RUD (20) of the respective node (12) or wherein the local memory (18) of each node (12) comprises the RUD entries (32) of the respective node (12).

3. The computer system (10, 10', 10") according to claim 1 or 2, wherein the NISD (14) comprises a plurality of NISD entries (34), wherein each NISD entry (34) relates to a memory location (22) of the local memory (18) of one of the plurality of nodes (12) and includes information indicating which of the one or more nodes (12) remotely cache the data of the respective memory location (22), wherein the NISD (14) is configured to implement the cache coherence across the nodes (12) using the RUI of the RUD (20) of each node (12) for memory locations (22) that do not have a related NISD entry (34) in the NISD (14).

4. The computer system (10, 10', 10") according to claim 3, wherein the NISD (14) comprises a NISD controller (36) that is configured to:
- receive, from a first node of the plurality of nodes (12), a first request relating to remote caching of a first memory location of the local memory (18) of a second node of the plurality of nodes (12),
- in case of a NISD miss in which none of the NISD entries (34) relates to remote caching of the first memory location, perform cache coherence processing of the first request using the RUI relating to the first memory location, and
- in case that the NISD entries (34) include a hit entry that relates to remote caching of the first memory location, perform cache coherence processing of the first request without using the RUI relating to the first memory location.

5. The computer system (10, 10', 10") according to claim 4, wherein the NISD controller (36) is configured to, in case of a NISD miss, obtain the RUI relating to the first memory location, in particular from the second node.

6. The computer system (10, 10', 10") according to claim 4 or 5, wherein the NISD controller (36) is configured to:
- in case of a NISD miss, determine based on the RUI relating to the first memory location whether the NISD miss is a true miss in which the data of the first memory location is not remotely cached by one or more other nodes (12) or a false miss in which the data of the first memory location is remotely cached by one or more other nodes (12),
- in case that the NISD miss is a true miss, create a new initial entry in the NISD (14) for the first memory location and process the first request by using the initial entry, and
- in case that the NISD miss is a false miss, recreate an entry in the NISD (14) for the first memory location and process the first request by using the recreated entry.

7. The computer system (10, 10', 10") according to claim 6, wherein, in case of a false miss, recreating the entry in the NISD (14) includes performing a broadcast snoop communication with all nodes (12) except for the first and second node, in particular wherein, in case of a true miss, a broadcast snoop communication with all nodes (12) except for the first and second node is not performed.

8. The computer system (10, 10', 10") according to claim 6, wherein the nodes (12) are grouped into a plurality of subsets and the RUI indicates, for each subset, whether or not the data of the memory location (22) corresponding to the RUI is cached by one or more nodes (22) of the respective subset, wherein, in case of a false miss, recreating the entry in the NISD (14) includes performing multicast snoop communication with the nodes of each subset for which the RUI indicates that one or more nodes (22) of the respective subset remotely cache the data of the first memory location.

9. The computer system (10, 10', 10") according to any of claims 1 to 8, wherein the NISD (14) comprises directory slices (40), wherein each directory slice is configured to manage remote caching of a unique subset of the memory locations (22) of the local memories (18) of the nodes (12).

10. The computer system (10', 10") according to claim 9, wherein the computer system (10', 10") comprises a plurality of fabric chips, wherein each fabric chip comprises at least one directory slice of the NISD, in particular wherein the computer system further comprises an interconnect that connects the plurality of nodes and the plurality of fabric chips with each other.

11. The computer system (10") according to any of claims 1 to 8, wherein the computer system (10") may comprise a multi-die chip (50), wherein one or more first dies (52) of the multi-die chip (50) comprise the computing units (16) of the nodes (12), wherein one or more second dies (54) of the multi-die chip (50) comprise the NISD (14).

12. A method (60), by a non-inclusive sparse directory, NISD (14), for implementing cache coherence across a plurality of nodes (12), wherein each node (12) comprises a computing unit (16) and a local memory (18) comprising a plurality of memory locations (22), wherein each computing unit (16) comprises one or more cores (24) and a cache system (26), **characterized in that** each node (12) further comprises a remote-use directory, RUD (20), wherein the RUD (20) comprises RUD entries (32), wherein each RUD entry (32) stores remote-use information, RUI, indicating whether or not data of a respective memory location (22) of the local memory (18) of the node (12) is cached by one or more other nodes (12), wherein the method (60) comprises the following step:
- performing (62) cache coherence processing to implement cache coherence across the nodes (12) using the RUI of the RUD (20) of each node (12).

13. The method (60) according to claim 12, wherein the NISD (14) comprises a plurality of NISD entries (34), wherein each NISD entry (34) relates to a memory location (22) of the local memory (18) of one of the plurality of nodes (12) and includes information indicating which of the one or more nodes (12) remotely cache the data of the respective memory location (22), wherein the step of performing cache coherence processing comprises:
- receiving (72, 112), from a first node of the plurality of nodes (12), a first request relating to remote caching of a first memory location of the local memory (22) of a second node of the plurality of nodes (12);
- in case of a NISD miss in which none of the NISD entries (34) relates to remote caching of the first memory location, performing (76, 128, 130, 134, 136) cache coherence processing of the first request using the RUI relating to the first memory location; and
- in case that the NISD entries (34) include a hit entry that relates to remote caching of the first memory location, performing (78, 118) cache coherence processing of the first request without using the RUI relating to the first memory location.

14. The method (60) according to claim 13, wherein the step of performing cache coherence processing of the first request using the RUI further comprises:
- obtaining (82) the RUI relating to the first memory location, in particular from the second node.

15. The method (60) according to claim 14, wherein the step of performing cache coherence processing of the first request using the RUI further comprises:
- determining (84) based on the RUI relating to the first memory location whether the NISD miss is a true miss in which the data of the first memory location is not remotely cached by one or more other nodes (12) or a false miss in which the data of the first memory location is remotely cached by one or more other nodes (12);
- in case that the NISD miss is a true miss, creating (86) a new initial entry in the NISD (14) for the first memory location and processing (88) the first request by using the initial entry; and
- in case that the NISD miss is a false miss, recreating (90) an entry in the NISD (14) for the first memory location and processing (92) the first request by using the recreated entry.

## Patentansprüche

1. Computersystem (10, 10', 10"), das eine Mehrzahl von Knoten (12) und ein nicht-inklusives Sparse-Verzeichnis, NISD (14), aufweist, wobei jeder Knoten (12) eine Recheneinheit (16) und ein lokales Memory (18) aufweist, das eine Mehrzahl von Memory-Stellen (22) aufweist, wobei jede Recheneinheit (16) einen oder mehrere Kerne (24) und ein Cache-System (26) aufweist, **dadurch gekennzeichnet, dass** jeder Knoten (12) des Weiteren ein Remote-Verwendungs-Verzeichnis, RUD (20), aufweist, wobei das RUD (20) RUD-Einträge (32) aufweist, wobei jeder RUD-Eintrag (32) Remote-Verwendungs-Information, RUI, speichert, die anzeigt, ob Daten einer jeweiligen Memory-Stelle (22) des lokalen Memorys (18) des Knotens (12) von einem oder mehreren anderen Knoten (12) gecached werden oder nicht, wobei das NISD (14) eingerichtet ist, um Cache-Kohärenz über die Knoten (12) unter Verwendung der RUI des RUD (20) jedes Knotens (12) zu implementieren.

2. Computersystem (10, 10', 10") nach Anspruch 1, wobei das Cache-System (26) jedes Knotens (12) das RUD (20) des jeweiligen Knotens (12) aufweist oder wobei das lokale Memory (18) jedes Knotens (12) die RUD-Einträge (32) des jeweiligen Knotens (12) aufweist.

3. Computersystem (10, 10', 10") nach Anspruch 1 oder 2, wobei das NISD (14) eine Mehrzahl von NISD-Einträgen (34) aufweist, wobei jeder NISD-Eintrag (34) sich auf eine Memory-Stelle (22) des lokalen Memorys (18) von einem der Mehrzahl von Knoten (12) bezieht und Information beinhaltet, die anzeigt, welche der einen oder mehreren Knoten (12) die Daten der jeweiligen Memory-Stelle (22) entfernt cachen, wobei das NISD (14) eingerichtet ist, um die Cache-Kohärenz über die Knoten (12) unter Verwendung der RUI des RUD (20) jedes Knotens (12) für Memory-Stellen (22) zu implementieren, die keinen darauf bezogenen NISD-Eintrag (34) in dem NISD (14) aufweisen.

4. Computersystem (10, 10', 10") nach Anspruch 3, wobei das NISD (14) eine NISD-Steuereinheit (36) aufweist, die eingerichtet ist, um:
- von einem ersten Knoten der Mehrzahl von Knoten (12) eine erste Anforderung zu empfangen, die sich auf entferntes Cachen einer ersten Memory-Stelle des lokalen Memorys (18) eines zweiten Knotens der Mehrzahl von Knoten (12) bezieht,
- im Falle eines NISD-Miss, bei dem sich keiner der NISD-Einträge (34) auf entferntes Cachen der ersten Memory-Stelle bezieht, eine Cache-Kohärenz-Verarbeitung der ersten Anforderung unter Verwendung der RUI durchzuführen, die sich auf die erste Memory-Stelle bezieht, und
- für den Fall, dass die NISD-Einträge (34) einen Hit-Eintrag beinhalten, der sich auf entferntes Cachen der ersten Memory-Stelle bezieht, eine Cache-Kohärenz-Verarbeitung der ersten Anforderung ohne Verwendung der RUI durchzuführen, die sich auf die erste Memory-Stelle bezieht.

5. Computersystem (10, 10', 10") nach Anspruch 4, wobei die NISD-Steuereinheit (36) eingerichtet ist, um, im Falle eines NISD-Miss, die RUI zu erhalten, die sich auf die erste Memory-Stelle bezieht, insbesondere von dem zweiten Knoten.

6. Computersystem (10, 10', 10") nach Anspruch 4 oder 5, wobei die NISD-Steuereinheit (36) eingerichtet ist, um:
- im Falle eines NISD-Miss basierend auf der RUI, die sich auf die erste Memory-Stelle bezieht, zu bestimmen, ob der NISD-Miss ein True-Miss ist, bei dem die Daten der ersten Memory-Stelle von einem oder mehreren anderen Knoten (12) nicht entfernt gecached werden, oder ein False-Miss ist, bei dem die Daten der ersten Memory-Stelle von einem oder mehreren anderen Knoten (12) entfernt gecached werden,
- für den Fall, dass der NISD-Miss ein True-Miss ist, einen neuen initialen Eintrag in dem NISD (14) für die erste Memory-Stelle zu erzeugen und die erste Anforderung durch Verwendung des initialen Eintrags zu verarbeiten, und
- für den Fall, dass der NISD-Miss ein False-Miss ist, einen Eintrag in dem NISD (14) für die erste Memory-Stelle wiederherzustellen und die erste Anforderung durch Verwendung des wiederhergestellten Eintrags zu verarbeiten.

7. Computersystem (10, 10', 10") nach Anspruch 6, wobei, im Falle eines False-Miss, das Wiederherstellen des Eintrags in dem NISD (14) das Durchführen einer Broadcast-Snoop-Kommunikation mit allen Knoten (12) mit Ausnahme des ersten und zweiten Knotens beinhaltet, insbesondere wobei, im Falle eines True-Miss, eine Broadcast-Snoop-Kommunikation mit allen Knoten (12) mit Ausnahme des ersten und zweiten Knotens nicht durchgeführt wird.

8. Computersystem (10, 10', 10") nach Anspruch 6, wobei die Knoten (12) in eine Mehrzahl von Teilmengen gruppiert sind und die RUI für jede Teilmenge anzeigt, ob die Daten der Memory-Stelle (22) korrespondierend zu der RUI von einem oder mehreren Knoten (22) der jeweiligen Teilmenge gecached werden oder nicht, wobei, im Falle eines False-Miss, das Wiederherstellen des Eintrags in dem NISD (14) das Durchführen einer Multicast-Snoop-Kommunikation mit den Knoten jeder Teilmenge beinhaltet, für welche die RUI anzeigt, dass ein oder mehrere Knoten (22) der jeweiligen Teilmenge die Daten der ersten Memory-Stelle entfernt cachen.

9. Computersystem (10, 10', 10") nach einem der Ansprüche 1 bis 8, wobei das NISD (14) Verzeichnis-Slices (40) aufweist, wobei jeder Verzeichnis-Slice eingerichtet ist, um entferntes Cachen einer eindeutigen Teilmenge der Memory-Stellen (22) der lokalen Memorys (18) der Knoten (12) zu verwalten.

10. Computersystem (10', 10") nach Anspruch 9, wobei das Computersystem (10', 10") eine Mehrzahl von Fabric-Chips aufweist, wobei jeder Fabric-Chip mindestens einen Verzeichnis-Slice des NISD aufweist, insbesondere wobei das Computersystem des Weiteren einen Interconnect aufweist, der die Mehrzahl von Knoten und die Mehrzahl von Fabric-Chips miteinander verbindet.

11. Computersystem (10") nach einem der Ansprüche 1 bis 8, wobei das Computersystem (10") einen Multi-Die-Chip (50) aufweisen kann, wobei ein oder mehrere erste Dies (52) des Multi-Die-Chips (50) die Recheneinheiten (16) der Knoten (12) aufweisen, wobei ein oder mehrere zweite Dies (54) des Multi-Die-Chips (50) das NISD (14) aufweisen.

12. Verfahren (60), durch ein nicht-inklusives Sparse-Verzeichnis, NISD (14), zum Implementieren von Cache-Kohärenz über eine Mehrzahl von Knoten (12), wobei jeder Knoten (12) eine Recheneinheit (16) und ein lokales Memory (18) aufweist, das eine Mehrzahl von Memory-Stellen (22) aufweist, wobei jede Recheneinheit (16) einen oder mehrere Kerne (24) und ein Cache-System (26) aufweist, **dadurch gekennzeichnet, dass** jeder Knoten (12) des Weiteren ein Remote-Verwendungs-Verzeichnis, RUD (20), aufweist, wobei das RUD (20) RUD-Einträge (32) aufweist, wobei jeder RUD-Eintrag (32) Remote-Verwendungs-Information, RUI, speichert, die anzeigt, ob Daten einer jeweiligen Memory-Stelle (22) des lokalen Memorys (18) des Knotens (12) von einem oder mehreren anderen Knoten (12) gecached werden oder nicht, wobei das Verfahren (60) den folgenden Schritt aufweist:
- Durchführen (62) von Cache-Kohärenz-Verarbeitung, um Cache-Kohärenz über die Knoten (12) unter Verwendung der RUI des RUD (20) jedes Knotens (12) zu implementieren.

13. Verfahren (60) nach Anspruch 12, wobei das NISD (14) eine Mehrzahl von NISD-Einträgen (34) aufweist, wobei jeder NISD-Eintrag (34) sich auf eine Memory-Stelle (22) des lokalen Memorys (18) von einem der Mehrzahl von Knoten (12) bezieht und Information beinhaltet, die anzeigt, welche der einen oder mehreren Knoten (12) die Daten der jeweiligen Memory-Stelle (22) entfernt cachen, wobei der Schritt des Durchführens der Cache-Kohärenz-Verarbeitung aufweist:
- Empfangen (72, 112), von einem ersten Knoten der Mehrzahl von Knoten (12), einer ersten Anforderung, die sich auf entferntes Cachen einer ersten Memory-Stelle des lokalen Memorys (22) eines zweiten Knotens der Mehrzahl von Knoten (12) bezieht;
- im Falle eines NISD-Miss, bei dem sich keiner der NISD-Einträge (34) auf entferntes Cachen der ersten Memory-Stelle bezieht, Durchführen (76, 128, 130, 134, 136) einer Cache-Kohärenz-Verarbeitung der ersten Anforderung unter Verwendung der RUI, die sich auf die erste Memory-Stelle bezieht; und
- für den Fall, dass die NISD-Einträge (34) einen Hit-Eintrag beinhalten, der sich auf entferntes Cachen der ersten Memory-Stelle bezieht, Durchführen (78, 118) einer Cache-Kohärenz-Verarbeitung der ersten Anforderung ohne Verwendung der RUI, die sich auf die erste Memory-Stelle bezieht.

14. Verfahren (60) nach Anspruch 13, wobei der Schritt des Durchführens der Cache-Kohärenz-Verarbeitung der ersten Anforderung unter Verwendung der RUI des Weiteren aufweist:
- Erhalten (82) der RUI, die sich auf die erste Memory-Stelle bezieht, insbesondere von dem zweiten Knoten.

15. Verfahren (60) nach Anspruch 14, wobei der Schritt des Durchführens der Cache-Kohärenz-Verarbeitung der ersten Anforderung unter Verwendung der RUI des Weiteren aufweist:
- Bestimmen (84) basierend auf der RUI, die sich auf die erste Memory-Stelle bezieht, ob der NISD-Miss ein True-Miss ist, bei dem die Daten der ersten Memory-Stelle von einem oder mehreren anderen Knoten (12) nicht entfernt gecached werden, oder ein False-Miss ist, bei dem die Daten der ersten Memory-Stelle von einem oder mehreren anderen Knoten (12) entfernt gecached werden;
- für den Fall, dass der NISD-Miss ein True-Miss ist, Erzeugen (86) eines neuen initialen Eintrags in dem NISD (14) für die erste Memory-Stelle und Verarbeiten (88) der ersten Anforderung durch Verwendung des initialen Eintrags; und
- für den Fall, dass der NISD-Miss ein False-Miss ist, Wiederherstellen (90) eines Eintrags in dem NISD (14) für die erste Memory-Stelle und Verarbeiten (92) der ersten Anforderung durch Verwendung des wiederhergestellten Eintrags.

## Revendications

1. Système informatique (10, 10', 10") comprenant une pluralité de nœuds (12) et un répertoire clairsemé non inclusif, NISD (14), où chaque nœud (12) comprend une unité de calcul (16) et une mémoire locale (18) comprenant une pluralité d'emplacements de mémoire (22), où chaque unité de calcul (16) comprend un ou plusieurs cœurs (24) et un système de cache (26), **caractérisé en ce que** chaque nœud (12) comprend en outre un répertoire d'utilisation à distance, RUD (20), où le RUD (20) comprend des entrées RUD (32), où chaque entrée RUD (32) stocke des informations d'utilisation à distance, RUI, indiquant si des données d'un emplacement de mémoire respectif (22) de la mémoire locale (18) du nœud (12) sont mises en cache ou non par un ou plusieurs autres nœuds (12), où le NISD (14) est configuré pour mettre en œuvre une cohérence de cache à travers les nœuds (12) en utilisant les RUI du RUD (20) de chaque nœud (12).

2. Système informatique (10, 10', 10") selon la revendication 1, dans lequel le système de cache (26) de chaque nœud (12) comprend le RUD (20) du nœud respectif (12) ou dans lequel la mémoire locale (18) de chaque nœud (12) comprend les entrées RUD (32) du nœud respectif (12).

3. Système informatique (10, 10', 10") selon la revendication 1 ou 2, dans lequel le NISD (14) comprend une pluralité d'entrées NISD (34), où chaque entrée NISD (34) se rapporte à un emplacement de mémoire (22) de la mémoire locale (18) de l'un de la pluralité de nœuds (12) et comprend des informations indiquant lequel du ou des plusieurs nœuds (12) met en cache à distance les données de l'emplacement de mémoire respectif (22), où le NISD (14) est configuré pour mettre en œuvre la cohérence de cache à travers les nœuds (12) en utilisant les RUI du RUD (20) de chaque nœud (12) pour les emplacements de mémoire (22) qui n'ont pas une entrée NISD (34) associée dans le NISD (14).

4. Système informatique (10, 10', 10") selon la revendication 3, dans lequel le NISD (14) comprend un dispositif de commande NISD (36) qui est configuré pour :
- recevoir, d'un premier nœud de la pluralité de nœuds (12), une première requête se rapportant à une mise en cache à distance d'un premier emplacement de mémoire de la mémoire locale (18) d'un deuxième nœud de la pluralité de nœuds (12),
- en cas de défaut NISD où aucune des entrées NISD (34) ne se rapporte à une mise en cache à distance du premier emplacement de mémoire, réaliser un traitement de cohérence de cache de la première requête en utilisant les RUI se rapportant au premier emplacement de mémoire, et
- dans le cas où les entrées NISD (34) comprennent une entrée correspondante qui se rapporte à une mise en cache à distance du premier emplacement de mémoire, réaliser un traitement de cohérence de cache de la première requête sans utiliser les RUI se rapportant au premier emplacement de mémoire.

5. Système informatique (10, 10', 10") selon la revendication 4, dans lequel le dispositif de commande NISD (36) est configuré pour, en cas de défaut NISD, obtenir les RUI se rapportant au premier emplacement de mémoire, en particulier à partir du deuxième nœud.

6. Système informatique (10, 10', 10") selon la revendication 4 ou 5, dans lequel le dispositif de commande NISD (36) est configuré pour :
- en cas de défaut NISD, déterminer, sur la base des RUI se rapportant au premier emplacement de mémoire, si le défaut NISD est un véritable défaut où les données du premier emplacement de mémoire ne sont pas mises en cache à distance par un ou plusieurs autres nœuds (12) ou un faux défaut où les données du premier emplacement de mémoire sont mises en cache à distance par un ou plusieurs autres nœuds (12),
- dans le cas où le défaut NISD est un véritable défaut, créer une nouvelle entrée initiale dans le NISD (14) pour le premier emplacement de mémoire et traiter la première requête en utilisant l'entrée initiale, et
- dans le cas où le défaut NISD est un faux défaut, recréer une entrée dans le NISD (14) pour le premier emplacement de mémoire et traiter la première requête en utilisant l'entrée recréée.

7. Système informatique (10, 10', 10") selon la revendication 6, dans lequel, en cas de faux défaut, la recréation de l'entrée dans le NISD (14) comprend la réalisation d'une communication de scrutation diffusée avec tous les nœuds (12) à l'exception des premier et deuxième nœuds, en particulier dans lequel, en cas de véritable défaut, une communication de scrutation diffusée avec tous les nœuds (12) à l'exception des premier et deuxième nœuds n'est pas réalisée.

8. Système informatique (10, 10', 10") selon la revendication 6, dans lequel les nœuds (12) sont regroupés en une pluralité de sous-ensembles et les RUI indiquent, pour chaque sous-ensemble, si les données de l'emplacement de mémoire (22) correspondant aux RUI sont mises en cache ou non par un ou plusieurs nœuds (22) du sous-ensemble respectif, où, en cas de faux défaut, la recréation de l'entrée dans le NISD (14) comprend la réalisation d'une communication de scrutation multidiffusée avec les nœuds de chaque sous-ensemble pour lequel les RUI indiquent qu'un ou plusieurs nœuds (22) du sous-ensemble respectif mettent en cache à distance les données du premier emplacement de mémoire.

9. Système informatique (10, 10', 10") selon l'une des revendications 1 à 8, dans lequel le NISD (14) comprend des tranches de répertoire (40), où chaque tranche de répertoire est configurée pour gérer la mise en cache à distance d'un sous-ensemble unique des emplacements de mémoire (22) des mémoires locales (18) des nœuds (12).

10. Système informatique (10', 10") selon la revendication 9, dans lequel le système informatique (10', 10") comprend une pluralité de puces de fabric, où chaque puce de fabric comprend au moins une tranche de répertoire du NISD, en particulier où, le système informatique comprend en outre une interconnexion qui relie la pluralité de nœuds et la pluralité de puces de fabric entre eux.

11. Système informatique (10") selon l'une des revendications 1 à 8, dans lequel le système informatique (10") peut comprendre une puce multi-die (50), où un ou plusieurs premiers cœurs (52) de la puce multi-die (50) comprennent les unités de calcul (16) des nœuds (12), où un ou plusieurs seconds cœurs (54) de la puce multi-die (50) comprennent le NISD (14).

12. Procédé (60), par un répertoire clairsemé non inclusif, NISD (14), pour mettre en œuvre une cohérence de cache à travers une pluralité de nœuds (12), où chaque nœud (12) comprend une unité de calcul (16) et une mémoire locale (18) comprenant une pluralité d'emplacements de mémoire (22), où chaque unité de calcul (16) comprend un ou plusieurs cœurs (24) et un système de cache (26), **caractérisé en ce que** chaque nœud (12) comprend en outre un répertoire d'utilisation à distance, RUD (20), où le RUD (20) comprend des entrées RUD (32), où chaque entrée RUD (32) stocke des informations d'utilisation à distance, RUI, indiquant si des données d'un emplacement de mémoire respectif (22) de la mémoire locale (18) du nœud (12) sont mises en cache ou non par un ou plusieurs autres nœuds (12), où le procédé (60) comprend l'étape suivante :
- de réalisation (62) d'un traitement de cohérence de cache pour mettre en œuvre la cohérence de cache à travers les nœuds (12) en utilisant les RUI du RUD (20) de chaque nœud (12).

13. Procédé (60) selon la revendication 12, dans lequel le NISD (14) comprend une pluralité d'entrées NISD (34), où chaque entrée NISD (34) se rapporte à un emplacement de mémoire (22) de la mémoire locale (18) de l'un de la pluralité de nœuds (12) et comprend des informations indiquant lequel du ou des plusieurs nœuds (12) met en cache à distance les données de l'emplacement de mémoire respectif (22), où l'étape de réalisation d'un traitement de cohérence de cache comprend :
- la réception (72, 112), d'un premier nœud de la pluralité de nœuds (12), d'une première requête se rapportant à une mise en cache à distance d'un premier emplacement de mémoire de la mémoire locale (18) d'un deuxième nœud de la pluralité de nœuds (12) ;
- en cas de défaut NISD où aucune des entrées NISD (34) ne se rapporte à une mise en cache à distance du premier emplacement de mémoire, la réalisation (76, 128, 130, 134, 136) d'un traitement de cohérence de cache de la première requête en utilisant les RUI se rapportant au premier emplacement de mémoire ; et
- dans le cas où les entrées NISD (34) comprennent une entrée correspondante qui se rapporte à une mise en cache à distance du premier emplacement de mémoire, la réalisation (78, 118) d'un traitement de cohérence de cache de la première requête sans utiliser les RUI se rapportant au premier emplacement de mémoire.

14. Procédé (60) selon la revendication 13, dans lequel l'étape de réalisation d'un traitement de cohérence de cache de la première requête en utilisant les RUI comprend en outre :
- l'obtention (82) des RUI se rapportant au premier emplacement de mémoire, en particulier à partir du deuxième nœud.

15. Procédé (60) selon la revendication 14, dans lequel l'étape de réalisation d'un traitement de cohérence de cache de la première requête en utilisant les RUI comprend en outre :
- la détermination (84), sur la base des RUI se rapportant au premier emplacement de mémoire, pour savoir si le défaut NISD est un véritable défaut où les données du premier emplacement de mémoire ne sont pas mises en cache à distance par un ou plusieurs autres nœuds (12) ou un faux défaut où les données du premier emplacement de mémoire sont mises en cache à distance par un ou plusieurs autres nœuds (12) ;
- dans le cas où le défaut NISD est un véritable défaut, la création (86) d'une nouvelle entrée initiale dans le NISD (14) pour le premier emplacement de mémoire et le traitement (88) de la première requête en utilisant l'entrée initiale ; et
- dans le cas où le défaut NISD est un faux défaut, la recréation (90) d'une entrée dans le NISD (14) pour le premier emplacement de mémoire et le traitement (92) de la première requête en utilisant l'entrée recréée.
